## Europäisches Patentamt
## European Patent Office
## Office européen des brevets

(19)

(11) Veröffentlichungsnummer: **0 131 791**
**B1**

(12)

# EUROPÄISCHE PATENTSCHRIFT

(45) Veröffentlichungstag der Patentschrift:
21.06.89

(51) Int. Cl.⁴: **G 01 N 30/00**

(21) Anmeldenummer: **84107283.8**

(22) Anmeldetag: **25.06.84**

(54) Säule für Flüssigchromatographie.

(30) Priorität: **24.06.83 CS 4677/83**

(43) Veröffentlichungstag der Anmeldung:
**23.01.85 Patentblatt 85/4**

(45) Bekanntmachung des Hinweises auf die Patenterteilung:
**21.06.89 Patentblatt 89/25**

(84) Benannte Vertragsstaaten:
**AT BE CH DE FR GB IT LI NL SE**

(56) Entgegenhaltungen:
EP-A-0 023 582
EP-A-0 068 343
DE-A-1 955 276
DE-A-2 329 286
DE-A-2 945 180
FR-A-2 313 105
US-A-3 855 130

G.I.T. FACHZEITSCHRIFT FÜR DAS
LABORATORIUM, Band 17, Sonderheft Mai 1973,
Seiten 563-565, Hannover, DE; K.-W. STAHL et al.:
"Mikrotrennsäule aus Glas für die Hochdruck-
Flüssigkeitschromatographie (HPLC)"

(73) Patentinhaber: **Ceskoslovenska akademie ved,
Narodni trida 3, Praha 1 (CS)**

(72) Erfinder: **Porsch, Bedrich, Dipl.- Ing., Slavikova 14,
Praha 3 (CS)**
Erfinder: **Voslar, Jaroslav, Madridská 26, Praha 10
(CS)**
Erfinder: **Rosol, Jaroslav, Dipl.- Ing., Plojharova 3,
Praha 6 (CS)**

(74) Vertreter: **Patentanwälte Beetz sen. - Beetz jun.
Timpe - Siegfried - Schmitt- Fumian,
Steinsdorfstrasse 10, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Säule für die Flüssigchromatographie.

In jüngster Zeit wurden gläserne Säulen für die Hochdruckflüssigchromatographie entwickelt (EP-A-0 068 343) und erfolgreich auf dem Markt eingeführt Derartige Säulen besitzen einen Innendurchmesser von 3,3 mm und eine Standardlänge von 150 mm und werden gewöhnlich bis zu einem Druck von 30 MPa verwendet. Sie sind gekennzeichnet durch ein durch Eindiffundieren von Ionen verfestigtes Glasrohr für die Sorbenspackung und Verschlüsse an beiden Enden des Glasrohrs, die Frontaldichtungen aus Kunststoff mit einer Ausnehmung, in die ein Sieb oder eine Fritte eingelassen sind, aufweisen, wobei der Durchmesser der Frontaldichtungen kleiner als oder gleich dem Außendurchmesser des Glasrohrs ist, ein äußeres Metallrohr um das Glasrohr und Endstücke aus Metall, in denen Öffnungen zur Ein- und Ableitung der Flüssigkeit vorgesehen sind.

Diese Säulen benötigen keinen Überdruckmantel, der durch äußeren Druck, z. B. einer Flüssigkeit, den inneren Druck in dem Glasrohr ausgleicht (vgl. z. B. FR-A-2 313 105); auf das Glasrohr wirkt nur atmosphärischer Druck. Glassäulen mit einem Innendurchmesser von 4 bis 30 mm sind zwar bekannt (DE-A-2 945 180), sie halten jedoch nur einen Druck bis 15 MPa aus.

Die Abdichtung des Glasrohrs erfolgt durch die Frontaldichtung, bei der die ausgelösten Axialkräfte auf das Glasrohr wirken Bei durch Oberflächendiffusion von Ionen befestigten Glasrohren mit einem Durchmesser von 3,3 mm haben diese Kräfte keine nachteiligen Wirkungen. Hierbei konnten die Nachteile des Glases, die in der geringen Druckfestigkeit und der Sprödigkeit begründen liegen, beseitigt werden, wobei zugleich die hervorragende chemische Beständigkeit und die vollkommen glatte innere Oberfläche zur Durchsetzung dieses Materials beitrugen. Säulen dieses Durchmessers können jedoch nicht zur Mikropräparation kleiner Fraktionen verwendet werden, da sie die Einspritzung höherer Probenmengen wegen der darin enthaltenen verhältnismäßig kleinen Sorbensmenge nicht erlauben. Es ist daher erforderlich, den Innendurchmesser auf mindestens 6 mm und vorteilhaft auf 8 mm zu vergrößern. Die Möglichkeit der Gewinnung von Mikrofraktionen ist sehr wünschenswert, da sie eine positive Identifizierung einzelner getrennter Verbindungen, beispielsweise durch moderne spektralanalytische Methoden wie NMR- und IR-Spektrometrie, erlaubt. Auch bei der Gelpermeationschromatographie ist es günstig, den Innendurchmesser und damit den Säuleninhalt zu erhöhen, insbesondere, wenn übliche Detektorsysteme bzw. Standardrefraktometer verwendet werden.

Bis jetzt sind auf dem Gebiet der modernen Hochdruckflüssigchromatographie gläserne Säulen größeren Durchmessers mit ausreichender Druckbeständigkeit nicht bekannt, da bisher keine geeignete Konstruktion angegeben werden konnte, mit der eine ausreichende Druckfestigkeit von Glasröhren größeren Durchmessers erzielt werden könnte.

Säulen für Mikropräparationszwecke mit einem Innendurchmesser von 6 bzw. 8 mm werden entsprechend bis jetzt ausschließlich aus rostfreiem Stahl hergestellt. Diese Säulen weisen jedoch sämtliche Nachteile auf, die das Konstruktionsmaterial mit sich bringt, d. h. nur geringe Korrosionsbeständigkeit bei langdauernder Anwendung beispielsweise von organischen Säuren, Halogenkohlenwasserstoffen oder wäßrigen Säure- oder Salzlösungen. Im Fall von biologisch aktiven Verbindungen können zudem beim Kontakt mit dem Metall irreversible Veränderungen der Probe eintreten. Ein weiterer Nachteil liegt in der Notwendigkeit einer sehr aufwendigen Bearbeitung der Innenoberfläche solcher rostfreier Stahlröhren.

Der Erfindung liegt demgegenüber die Aufgabe zugrunde, eine Säule für Flüssigchromatographie anzugeben, die auch eine größere Dimensionierung etwa für Zwecke der Mikropräparation erlaubt und aus Glas besteht, wobei zugleich die Nachteile herkömmlicher Säulen für Mikropräparationszwecke vermieden werden sollen. Dabei sollte das Glasrohr so abgedichtet werden, daß es durch den frontalen Druck nicht beansprucht wird.

Die Aufgabe wird anspruchsgemäß gelöst durch eine Säule für Flüssigchromatographie mit Säule für Flüssigchromatographie

- mit einem durch Eindiffundieren von Ionen verfestigten Glasrohr für die Sorbenspackung,
- mit einem äußeren Metallrohr um das Glasrohr, das an beiden Enden auf der Innenseite Ausnehmungen aufweist, in denen jeweils ein konischer, mit seinen Grundflächen zu den entsprechenden Enden des Glasrohrs hin und koaxial angeordneter Klemmring aus Metall und eine entsprechend konisch geformte Ringdichtung aus Kunststoff zwischen Klemmring und Glasrohr so eingesetzt sind, daß sie das Ende des Glasrohrs abdichtend umgeben,
- mit an beiden Säulenenden vorgesehenen Frontaldichtungen aus Kunststoff mit einer Ausnehmung, in die ein Sieb oder eine Fritte eingepreßt sind, wobei der Durchmesser der Frontaldichtung dem Außendurchmesser des Klemmrings entspricht, und
- mit an beiden Säulenenden vorgesehenen Endstücken aus Metall, in denen Öffnungen zur Ein- und Ableitung der Flüssigkeit vorgesehen sind, und die über Anschlußgewinde an die Enden des Metallrohrs aufgeschraubt sind, wobei die Grundfläche des Klemmrings und eine dieser Grundfläche zugewandten Fläche des Endstücks Dichtungsanlageflächen für die jeweilige Frontaldichtung bilden und die Dichtungsanlagefläche des Endstücks Ausdehnungsnuten mit einem Durchmesser größer als der Innendurchmesser und kleiner als der Außendurchmesser des Klemmrings aufweisen.

Die konischen Ringdichtungen sowie die Frontaldichtungen bestehen vorzugsweise aus Polytetrafluorethylen.

Der Vorteil der erfindungsgemäßen Säule liegt insbesondere in der hervorragenden chemischen Beständigkeit und der vollkommen glatten Innenoberfläche, die die Erzielung hoher chromatographischer Trennleistungen ermöglicht. Ein weiterer Vorteil liegt in der Chromatographierbarkeit biologischer Materialien, die nicht mit Metallen in Kontakt kommen dürfen. Die erfindungsgemäßen Säulen können ferner wiederholt leicht mit Sorbentien gefüllt werden, ohne daß aufwendige Montagearbeiten anfallen.

Das Glasrohr ist durch Eindiffundieren von Kaliumionen in das Glas in einer oberflächlichen Schicht bei erhöhter Temperatur verfestigt. Durch diese Behandlung wird die Druckfestigkeit des Glasrohrs erhöht, was sowohl beim Füllen der Säule mit Sorbensmaterial als auch bei der Chromatographie selbst sehr vorteilhaft ist.

Der Raum zwischen dem Glasrohr und dem äußeren Metallrohr kann zur Temperierung dadurch ausgenutzt werden, daß das Metallrohr mit Ein- und Ableitungen für Temperierungsmedien versehen ist. Das Metallrohr kann ferner aus Metallen mit niedrigerer Korrosionsbeständigkeit hergestellt werden, da es mit der mobilen Phase nicht mehr in Kontakt kommt. Aus dem gleichen Grund können auch die Endstücke so ausgeführt sein, daß sie lediglich im zentralen Teil aus einem dort eingesetzten korrosionsbeständigen Material bestehen.

Wenn geeignete Kapillaren für den Zu- und Abfluß der mobilen Phase an der Säule verwendet werden, beispielsweise mit einer mit Glas belegten Innenoberfläche, kann der Kontakt der zu trennenden Stoffe mit metallischen Säulenmaterialien völlig ausgeschlossen werden.

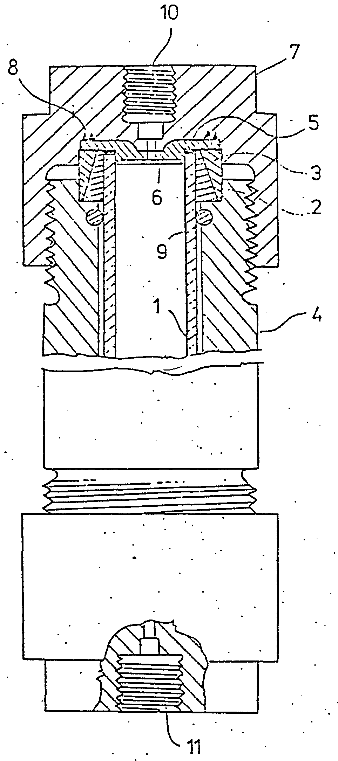

Die erfindungsgemäße Säule für Flüssigchromatographie wird im folgenden anhand der Zeichnung näher erläutert.

Die Säule besteht aus einem Glasrohr 1, das einerseits durch eine konische Ringdichtung 2 aus Kunststoff, die zusammen mit einem konischen Metallklemmring 3 in einer entsprechenden Ausnehmung im äußeren Metallrohr 4 vorgesehen ist, und andererseits durch die Frontaldichtung 5 aus Kunststoff abgedichtet ist, in deren Ausnehmung ein rostfreies Netz bzw Sieb oder eine poröse Fritte 6 eingepreßt sind.

Beide Dichtungen sind mit dem Endstück 7 aus Metall, dessen innere Frontalfläche Ausdehnungsnuten 8 aufweist, auf die Säule aufgeschraubt. Die rostfreien Endstücke 7 weisen Gewinde 10 und gegebenenfalls 11 zur Befestigung von Zu- und Ableitungen für die mobile Phase und gegebenenfalls einer Einspritzeinrichtung auf.

Zur besseren Zentrierung des Glasrohrs 1 ist vorzugsweise auf der Innenseite des Metallrohrs 4 etwas unterhalb der konischen Ausnehmung für die konische Ringdichtung 2 eine Nut und darin ein O-Ring 9 aus Gummi bzw. Kautschuk als Führungsring vorgesehen. Das äußere Metallrohr 4 weist vorzugsweise Löcher oder ausgefräste Schlitze zur Kontrolle der Füllung des darunterliegenden Glasrohrs 1 auf.

Bei der Montage werden zunächst die Siebe bzw Fritten 6 in die Frontaldichtung 5 eingepreßt, worauf die Rindgdichtung 2 und der konische Klemmring 3 in die Ausnehmung des Metallrohrs 4 eingesetzt werden und diese Teile dann durch leichtes Anziehen des Endstücks 7 fixiert werden. Nach dem Zusammensetzen der Dichtungen an beiden Säulenenden werden die Endstücke 7 festgeschraubt. Die konische Ringdichtung 2 und die Frontaldichtung 5 sind formmäßig an das Glasrohr 1 angepaßt, das sie abdichten. Gleichzeitig wird beim Anziehen der Endstücke 7 auch die Frontaldichtung 5 zusammengepreßt, so daß sie innerhalb des Endstücks 7 fixiert wird und andererseits eine leichte Demontage des Endstücks möglich ist. Damit ist die Säule zur Füllung mit Sorbens- und Sorbatmaterial vorbereitet.

## Beispiel 1

Es wurde eine der Zeichnung entsprechende Säule hergestellt. Das Glasrohr bestand aus Borosilikatglas (SIAL-Glas) und besaß eine Länge von 150 mm, einen Innendurchmesser von 5,8 mm und einen Außendurchmesser von 10,7 mm. Das äußere Metallrohr 4 besaß einen Innendurchmesser von 11 mm und eine Wandstärke von 5 mm und war aus Dural hergestellt. In die Frontaldichtung 5 wurde ein rostfreies Netz von 3 μm Maschenweite eingepreßt. Die aus rostfreiem Material bestehenden Endstücke 7 der Säule wiesen Öffnungen und Gewinden 10, 11 zur Befestigung der Zu- und Ableitungen für die mobile Phase und gegebenenfalls einer Einspritzeinrichtung auf und waren an die Enden des Metallrohrs 4 angeschraubt. Das Glasrohr 1 war durch Eindiffundieren von Kaliumionen in die oberflächliche Schicht verfestigt; es widerstand ohne Zerstörung einem Druck von 72 MPa.

## Beispiel 2

Es wurde wie in Beispiel 1 eine Säule aus einem dickwandigen Glasrohr 1 von 150 mm Länge, einem Innendurchmesser von 9,5 mm und einem Außendurchmesser von 17 mm aus Borosilikatglas (SIAL-Glas) hergestellt. Das äußere Metallrohr 4 besaß einen Innendurchmesser von 17,5 mm und eine Wandstärke von 7 mm. Es war aus Dural angefertigt und wies ausgebohrte Öffnungen zur Kontrolle der Sorbensfülllung auf. Die Säule mit dem durch Eindiffusion von Kaliumionen verstärkten Glasrohr 1 widerstand ohne Zerstörung einem Druck von 76 MPa.

**Beispiel 3**

Es wurde eine Säule wie in Beispiel 1 hergestellt. Das Glasrohr 1 bestand aus Molybdänglas und besaß eine Länge von 150 mm, einen Innendurchmesser von 9 mm und einen Außendurchmesser von 18 mm. Das äußere Metallrohr 4 bestand aus Messing und besaß einen Innendurchmesser von 18,5 mm und eine Wandstärke von 5 mm. Das chemisch verfestigte Glasrohr 1 in der Säule widerstand einem Druck von 72 MPa.

**Beispiel 4**

Es wurde eine Säule wie in Beispiel 1 hergestellt. Das Glasrohr 1 bestand aus Borosilikatglas (Glas G-20) und wies einen Innendurchmesser von 16 mm, einen Außendurchmesser von 22 mm und eine Länge von 150 mm auf. Das äußere Metallrohr bestand aus Dural und besaß einen Innendurchmesser von 16,5 mm und eine Wandstärke von 5 mm. Es war mit einer Ein- und Ableitung für Temperierflüssigkeit versehen.

**Patentansprüche**

1. Säule für Flüssigchromatographie

- mit einem durch Eindiffundieren von Ionen verfestigten Glasrohr (1) für die Sorbenspackung,
- mit einem äußeren Metallrohr (4) um das Glasrohr (1), das an beiden Enden auf der Innenseite Ausnehmungen aufweist, in denen jeweils ein konischer, mit seinen Grundflächen zu den entsprechenden Enden des Glasrohrs (1) hin und koaxial angeordneter Klemmring (3) aus Metall und eine entsprechend konisch geformte Ringdichtung (2) aus Kunststoff zwischen Klemmring und Glasrohr so eingesetzt sind, daß sie das Ende des Glasrohrs (1) abdichtend umgeben,
- mit an beiden Säulenenden vorgesehenen Frontaldichtungen (5) aus Kunststoff mit einer Ausnehmung, in die ein Sieb oder eine Fritte (6) eingepreßt sind, wobei der Durchmesser der Frontaldichtung (5) dem Außendurchmesser des Klemmrings (3) entspricht, und
- mit an beiden Säulenenden vorgesehenen Endstücken (7) aus Metall, in denen Öffnungen zur Ein- und Ableitung der Flüssigkeit vorgesehen sind, und die über Anschlußgewinde an die Enden des Metallrohrs (4) aufgeschraubt sind, wobei die Grundfläche des Klemmrings und eine dieser Grundfläche zugewandten Fläche des Endstücks Dichtungsanlageflächen für die jeweilige Frontaldichtung bilden und die Dichtungsanlagefläche des Endstücks Ausdehnungsnuten (8) mit einem Durchmesser größer als der Innendurchmesser und kleiner als der Außendurchmesser des Klemmrings (3) aufweisen.

2. Säule nach Anspruch 1, in der das äußere Metallrohr (4) unterhalb der Ausnehmungen an den Enden eine Ringnut aufweist, in der ein elastischer Führungsring (9) vorgesehen ist.

3. Säule nach Anspruch 1 oder 2, in der die Endstücke (7) in ihrem zentralen Teil aus einem eingesetzten korrosionsbeständigen Material bestehen.

4. Säule nach einem der Ansprüche 1 bis 3, in der das äußere Metallrohr (4) Schlitze oder Durchgangsbohrungen zur Kontrolle des darunterliegenden Glasrohrs (1) aufweist.

**Claims**

1. A column for liquid chromatography comprising:

- a glass tube (1) which is strenghthened by diffusion of ions thereinto for the sorbent packing,
- an outer metal tube (4) around the glass tube (1), which on the inside at both ends has recesses, in each of which are fitted a respective conical clamping ring (3) of metal which is arranged coaxially and with its base surfaces towards the corresponding ends of the glass tube (1), and a correspondingly conically shaped ring seal (2) of plastics material between the clamping ring and the glass tube, in such a way that they are sealingly surround the end of the glass tube (1),
- frontal seals (5) of plastics material, provided at both ends of the column, having a recess into which are pressed a sieve or a frit (6), wherein the diameter of the frontal seal (5) corresponds to the outside diameter of the clamping ring (3), and
- end portions (7) of metal which are provided at both ends of the column and in which there are provided openings for introducing and removing the liquid and which are screwed by way of connecting screwthreads to the ends of the metal tube (4), wherein the base surface of the clamping ring and a surface of the end portion which is towards said base surface form sealing contact surfaces for the respective frontal seal and the sealing contact surface of the end portion has expansion grooves (8) with a diameter larger than the inside diameter and smaller than the outside diameter of the clamping ring (3).

2. A column according to claim 1 in which the outer metal tube (4) is provided beneath the recesses at the ends with an annular groove in which there is a resilient guide ring (9).

3. A column according to claim 1 or claim 2 in which the end portions (7), in the central part thereof, comprise an inserted corrosionresistant material.

4. A column according to one of claim 1 to 3 in which the outer metal tube (4) has slits or through bores for checking the subjacent glass tube (1).

**Revendications**

1. Colonne pour chromatographie liquide comportant

- un tube de verre (1) renforcé par diffusion d'ions pour le remplissage de sorbant,
- un tube métallique extérieur (4) autour du tube de verre (1), qui présente aux deux extrémités sur le côté interne des évidements, dans lesquels sont introduits une bague de serrage (3) en métal conique, avec ses surfaces de base disposées aux extrémités correspondantes du tube de verre (1) et coaxialement et un dispositif annulaire d'étanchéité (2) façonné coniquement de façon correspondante en matière plastique entre la bague de serrage et le tube de verre, de sorte qu'ils entourent de façon étanche le tube de verre (1),
- des dispositifs frontaux d'étanchéité (5) en matière plastique prévus aux deux extrémités de la colonne avec un évidement dans lequel sont enfoncés un filtre ou une fritte (6), le diamètre du dispositif frontal d'étanchéité (5) correspondant au diamètre extérieur de la bague de serrage (3), et
- des pièces terminales (7) en métal prévues aux deux extrémités de la colonne, dans lesquelles sont prévues des ouvertures en vue de l'amenée et de l'extraction du liquide, et qui sont vissées par des taraudages aux extrémités du tube métallique (4), la surface de base de la bague de serrage et une surface tournée vers cette surface de base de la pièce terminale forment des surfaces d'application d'étanchéité pour l'étanchéité frontale respective et les surfaces d'application d'étanchéité de la pièce terminale présentent des rainures de dilatation (8) avec un diamètre supérieur au diamètre intérieur et inférieur au diamètre extérieur de la bague de serrage (3).

2. Colonne selon la revendication 1, dans laquelle le tube métallique extérieur (4) présente, au-dessous des évidements aux extrémités, une rainure annulaire, dans laquelle est prévue une bague de guidage élastique (9).

3. Colonne selon la revendication 1 ou 2, dans laquelle les pièces terminales (7) se composent dans leur partie centrale d'un matériau résistant à la corrosion enfoncé.

4. Colonne selon une des revendications 1 à 3, dans laquelle le tube métallique extérieur (4) présente des fentes ou des alésages de passage en vue du contrôle du tube de verre sous-jacent (1).